# EUROPEAN PATENT APPLICATION

(11) **EP 0 605 197 A2**
(43) Date of publication of application: **06.07.1994**
(21) Application number: 93310444.0
(22) Date of filing: 22.12.1993
(51) Int. Cl.: C08L 79/08, C08L 71/12

(54) **Polyether-imide resin compositions**

(30) Priority: 28.12.1992 JP 360924/92
(71) Applicant: GE PLASTICS JAPAN LIMITED, Chuo-Ku, Tokyo (JP)
(72) Inventor: Morokuma, Hiroshi, Moka City, Tochigi Prefecture (JP); Morioka, Masataka, Moka City, Tochigi Prefecture (JP)
(74) Representative: Pratt, Richard Wilson

(57) **Abstract**

Compatible blends of polyetherimides with poly(phenylene ethers) comprise (A) 1∼99 wt. parts polyether-imides and (B) 99∼1 wt. parts epoxy-modified poly(phenylene ether) resins.

## Description

The present invention provides compositions of polyether-imides and poly(phenylene ethers) with improved compatibility.

There have been numerous attempts in the prior art to overcome the drawbacks of a given thermoplastic resin by blending it with a different thermoplastic resin. However, dissimilar polymers generally have poor compatibility, and so they do not form uniform mixtures. They tend to separate out in layers during molding, and give materials which are brittle, with impaired mechanical strength and impact strength.

Polyether-imide resins have attracted attention as engineering plastics with excellent heat resistance, flame retardance, stiffness, and chemical resistance, suitable for applications such as electrical and automotive parts. Polyether-imide resins are expensive, however, so there is an urgent need in many fields of application to bring down their cost while maintaining their excellent properties.

Poly(phenylene ether) resins, on the other hand, are widely used engineering plastics having excellent mechanical properties and relatively low cost.

The idea therefore occurs to form compositions by combining these two resin types, but because their compatibility is poor they tend to undergo phase separation and layer peeling, and to show low mechanical strength and impact strength.

The object of the present invention is to improve the compatibility of polyether-imides with poly(phenylene ethers), and to provide compositions of the two resins having good mechanical properties.

The present inventors have found that the compatibility of poly(phenylene ethers) with polyether-imides can be dramatically improved by replacing at least part of the conventional poly(phenylene ethers) with epoxy-modified poly(phenylene ethers). That discovery has led to the present invention.

The present invention thus comprises resin compositions containing (A) 1∼99 wt. parts polyether-imides and (B) 99∼1 wt. part epoxy-modified poly(phenylene ethers).

The polyether-imides themselves are known polymers typically having repeating units represented by the following formula: 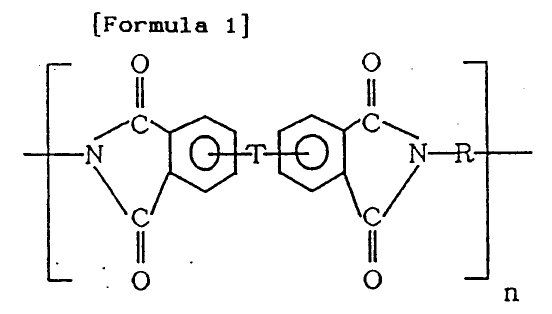
(where *n* is the number of repeating units; T is -O- or -O-Z-O-, the two linkages are formed at the 3,3'-, 3,4'-, 4,3'-, or 4,4'- positions; and Z is a divalent organic moeity selected from the group comprising (A) 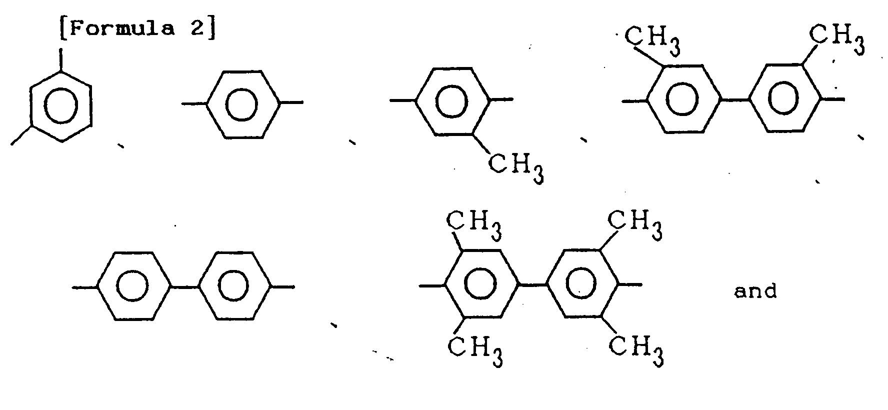 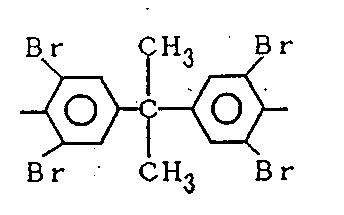
and (B) 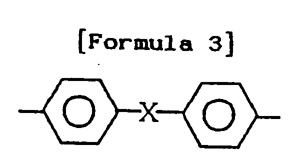
where X in the formula (B) is a divalent moeity selected from the group comprising -C_{y}H_{2y}-, -C(=O)-, -S(=O)₂-, -O-, and -S-, *y* being an integer from 1 to about 5; and R is a divalent organic moeity selected from the group comprising (a) aromatic hydrocarbylene groups or halogenated hydrocarbylene groups having from 6 to about 20 carbon atoms, (b) alkylene groups having from 2 to about 20 carbon atoms or cycloalkylene groups having from 3 to about 20 carbon atoms, and (c) 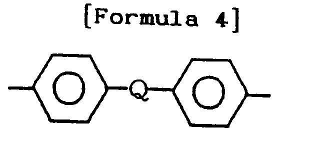
where Q in the formula (c) is a divalent moeity selected from the group comprising -S-, -O-, -C(=O)-, -S(=O)₂-, and -CₓH₂ₓ-, *x* being an integer from 1 to about 5 .

Preferred polyether-imides also contain the following repeating unit: 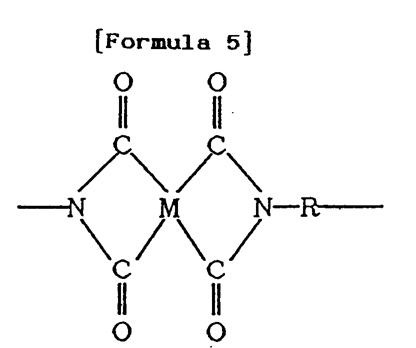
(where R is as previously defined, and M is a moeity selected from the group comprising 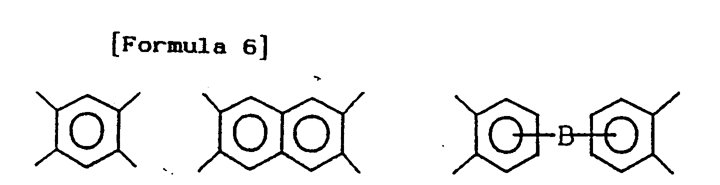
in which B is either -S- or -C(=O)-.

Particularly preferred polyether-imides are those represented by the following general formula: 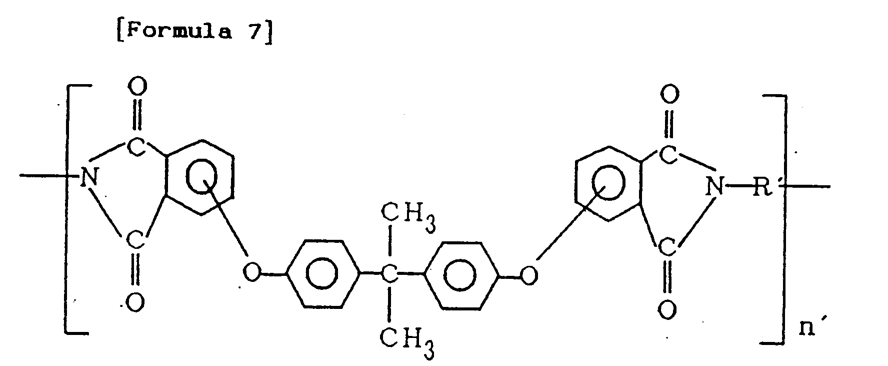
(in which R' is an aromatic hydrocarbylene group having 6∼20 carbons, and *n'* is an integer greater than or equal to 2). A representative example is Ultem®, manufactured by General Electric, the method of producing which is disclosed in Japanese Patent Publication No. 57-9372. The polyether-imide resins must have a high enough degree of polymerization to be impact resistant.

Poly(phenylene ether) resins are known, and have repeating units represented by the formula: 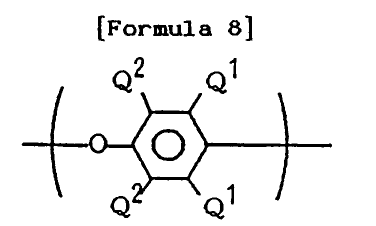
(where each Q¹ is independently a halogen, a primary or secondary alkyl group (containing up to 7 carbons), a phenyl group, a haloalkyl group, an aminoalkyl group, a hydrocarbyloxy group, or a halohydrocarbyloxy group having at least two carbon atoms between the halogen and the oxygen atoms; and each Q² is independently a hydrogen atom, a halogen atom, a primary or secondary lower alkyl group, a phenyl group, a haloalkyl group, a hydrocarbyloxy group, or a halohydrocarbyloxy group of the type defined for Q¹).

It may be a homopolymer having one such repeating units, or a copolymer combining two or more different repeating units. In preferred examples, R₁ and R₂ are alkyl groups having 1∼4 carbon atoms, while R₃ and R₄ are hydrogen atoms or alkyl groups having 1∼4 carbon atoms. Examples include poly(2,6-dimethyl-1,4-phenylene ether), poly(2,6-diethyl-1,4-phenylene ether), poly(2-methyl-6-ethyl-1,4-phenylene ether), poly(2-methyl-6-propyl-1,4-phenylene ether), poly(2,6-dipropyl-1,4-phenylene ether), poly(2-ethyl-6-propyl-1,4-phenylene ether), etc. PPE copolymers may have the same repeating units as one of these poly(phenylene ethers) and in addition a portion of repeating units formed from trialkyl phenols such as 2,3,6-trimethylphenol. The PPEs may also be copolymers formed by grafting with styrenic compounds. For example, one of the PPEs listed above may be grafted with a compound such as styrene, α-methylstyrene, vinyltoluene, chlorostyrene, etc. to form a copolymer.

The present invention uses (B) poly(phenylene ether) resins which have been modified so that they contain epoxy groups. An example of such an epoxy-modified poly(phenylene ether) resin (B) is one containing epoxytriazine groups. The epoxytriazine groups are generally present as caps at the ends of the poly(phenylene ether) chain, but they may also be present at other positions along the polymer chain.

Epoxytriazine-endcapped poly(phenylene ethers) and a method of preparing them are disclosed in U.S. Patent Application Serial No. 210, 547 (filed June 23, 1988). The polymer molecules have end groups represented by the following formula: 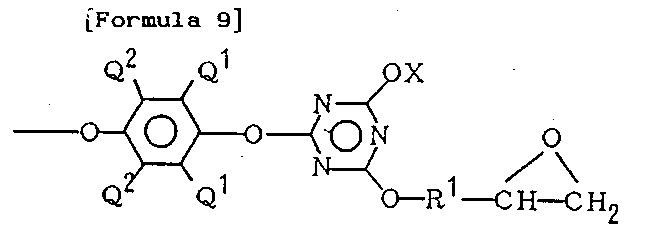
where Q¹ and Q² are as defined in the formula for poly(phenylene ether) resins above; X is an alkyl group, cycloalkyl group, aromatic residue, or -R¹-epoxy residue, where R¹ is a divalent aliphatic, alicyclic, heterocyclic, or substituted or unsubstituted aromatic hydrocarbylene group.

Other examples of epoxy group-containing poly(phenylene ether) resins (B) include poly(phenylene ethers) having repeating units of the types described above, which have been copolymerized or grafted with copolymerizable unsaturated monomers that have epoxy groups, such as glycidyl methacrylate, glycidyl acrylate, vinyl glycidyl ether, allyl glycidyl ether, glycidyl ethers of hydroxyalkyl (meth)acrylates, poly(alkylene glycol) (meth)acrylate glycidyl ethers, glycidyl itaconate, etc. The amount of epoxy group-containing copolymerizable unsaturated monomers is usually 0.1∼30 wt%, preferably 0.5∼20 wt%, of the resin (B).

The amounts of polyether-imides and epoxy-modified poly(phenylene ethers) in resin compositions in accordance with the present invention are 1∼99 wt. parts each. If the amount of polyether-imides is less than 1 wt. part, the composition will not exhibit the outstanding properties of polyether-imides. If the amount of epoxy-modified poly(phenylene ethers) is less than 1 wt. part, the composition will not exhibit the characteristics of that resin, and will have little economic advantage.

Resin compositions in accordance with the present invention may also contain other resins. For example, they may contain unmodified poly(phenylene ether) resins which show excellent compatibility with the epoxy-modified poly(phenylene ethers), preferably in amounts not exceeding 90 wt% based on component (B). The compositions may also contain aromatic vinyl resins that show good compatibility with the epoxy-modified and unmodified poly(phenylene ethers), such as polystyrene or rubber-modified polystyrene, preferably in amounts not exceeding 70 wt% based on component (B).

Compositions in accordance with the present invention may also contain other known additives, including stabilizers such as antioxidants, ultraviolet absorbers, or waterproofing agents (hydrolysis inhibitors), as well as plasticizers, lubricants, flame retardants, flame-retardant auxiliaries, antistatic agents, colorants, static charging promotors, sliding friction or wear-reducing additives (solid or liquid lubricants), polyfunctional crosslinking agents, impact strength enhancing agents (e.g., elastomers having T_{g} below 0°C, preferably below -20°C, most preferably rubbers having reactive groups), other inorganic fillers, fibrous reinforcing agents (e.g., glass fibers, carbon fibers, graphite fibers, silicon carbide fibers, silicon nitride fibers, boron nitride fibers, potassium titanate whiskers, heat-resistant organic fibers), electric conductivity-imparting agents (e.g., metal fibers, polyacetylene fibers, metal powders, phosphorus steel, carbon black, conductive organic polymers, etc. ), in amounts which do not interfere with the object of this invention. Inorganic fillers or inorganic fibers may be added together with silane couplers, titanate couplers, zircoaluminate couplers, etc. There is no particular restriction on the method used to prepare resin compositions in accordance with the present invention; any known means may be used, although melt mixing techniques are usually preferred. Each component may be added separately to the melt-mixing device, or they may be premixed in an emulsifier, Henschel mixer, ball mill, ribbon blender, etc., and then fed to the melt mixing device. It is also possible to premix selected components by melt mixing, to be melt mixed later with the rest of the composition.

The present invention will now be explained in detail by means of examples.

### Examples

The components used were as follows:
. Polyether-imide (PEI): Ultem 1000® (from General Electric Co. )
. Unmodified poly(phenylene ether) (PPE): Poly(2,6-dimethyl-1,4-phenylene ether), with inherent viscosity 0.48 dL/g
. Epoxy-modified poly(phenylene ether) (Epoxy PPE): a resin prepared as follows from the above PPE.

Various epoxychlorotriazines were dissolved in small amounts of methylene chloride and added to a solution of 400 g poly(phenylene ether) in 2500 mL of toluene. Then 48 g of a 10% solution in toluene of a commercial methyltrialkylammonium chloride (in which the alkyl groups have 8∼10 carbon atoms), and a 10% aqueous solution of sodium hydroxide (enough to provide 1.3 equivalents NaOH per mole of epoxychlorotriazine) were added to each solution. Each mixture was stirred vigorously at 25∼40°C for a measured period of time, then the resulting product was precipitated in methanol in a blender, filtered out, washed with methanol, and vacuum dried.

The various components were combined in the amounts (wt. parts) listed in Table 1, melt kneaded in a twin-screw extruder at 350°C and 150 rpm, and then injection molded at a cylinder temperature of 350°C and a mold temperature of 80°C to form Izod impact strength test pieces.

The Izod impact strength was measured by cutting a notch in an ASTM No. 1 dumbbell (thickness ⅛ inch), and striking it from the opposite side with a 2-pound hammer. The strength is expressed in units of kg-cm/cm. The fracture surfaces of each specimen were examined visually and under a microscope.

**Table 1**

| | Ex. 1 | 2 | 3 | Comp. 1 | 2 | 3 |
|---|---|---|---|---|---|---|
| Polyether-imide | 70 | 50 | 30 | 70 | 50 | 30 |
| PPE | | | | 30 | 50 | 70 |
| Expoxy-modified PPE | 30 | 50 | 70 | | | |
| Impact Strength | 39 | 57 | 37 | 28 | 30 | 21 |
| Fracture Surface | good | good | good | layer sepn. | layer sepn. | layer sepn. |

In Examples 1∼3, the impact strength was clearly improved, and the absence of layer separation on the fracture surfaces indicates that the compatibility of the two resins was markedly enhanced.

The present invention makes it possible to provide well compatibilized resin compositions containing polyether-imide resins and poly(phenylene ether) resins.

## Claims

1. Polyether-imide resin compositions containing 1∼99 wt. parts polyther-imides and 99∼1 wt. parts epoxy-modified poly(phenylene ether) resins.
